# EUROPEAN PATENT APPLICATION

(11) **EP 3 896 825 A1**
(43) Date of publication of application: **20.10.2021**
(21) Application number: 21167299.3
(22) Date of filing: 08.04.2021
(51) Int. Cl.: H02K 1/28, H02K 7/00, H02K 1/27, H02K 5/16, H02K 5/173

(54) **MOTOR DEVICE**

(30) Priority: 13.04.2020 JP 2020071495
(71) Applicant: Mitsuba Corporation, Kiryu-shi, Gunma 376-8555 (JP)
(72) Inventor: OHORI, Ryo, Kiryu-shi, Gunma, 3768555 (JP); TAI, Takashi, Kiryu-shi, Gunma, 3768555 (JP); FUJIU, Masaru, Kiryu-shi, Gunma, 3768555 (JP)
(74) Representative: Becker, Eberhard

(57) **Abstract**

A motor device is provided. The motor device includes a rotor (9), a rotation shaft (31), a stator, a casing, and a bearing (46, 47). The rotor (9) has a rotor core (32) and a rotation shaft (31). The bearing (46, 47) is mounted on the other end side of the rotation shaft (31) in the axial direction and supports the rotor (9) in a cantilevered state. The rotor core (32) has a shaft core hole (69) that fixes the rotation shaft (31) inserted therein. An end face of the rotation shaft (31) facing one side in the axial direction is disposed further close to other side in the axial direction than an end face of the rotor core (32) facing one side in the axial direction and further close to one side in the axial direction than a center position in the axial direction.

## Description

### BACKGROUND

### Technical Field

The present disclosure relates to a motor device that is used in a wiper device of a vehicle and the like.

### Description of Related Art

As a motor device used in a wiper device of a vehicle and the like, there is a device in which a rotor is disposed inside a stator, around which a coil is wound, in a diameter direction. In a motor device of such a type, a rotor having multiple permanent magnets held on the outer circumference of a rotor core is used, and a rotation shaft is attached to an axial core part of the rotor core (for example, see Patent Document 1).

In a motor device described in Patent Document 1, a rotor core is configured by stacking multiple steel sheets (magnetic steel sheets) in an axial direction. An axial core hole is formed in an axial core part of the rotor core, and a rotation shaft is press-fitted and fixed in the axial core hole.

This motor device is a motor device provided with a decelerator, and a deceleration mechanism is also housed inside a casing that houses a stator and rotors. The deceleration mechanism includes a worm shaft that is an input rotary body and a worm wheel that is an output rotary body, and the worm shaft is connected to a shaft that is the same as a rotation shaft on the rotor side. Both-side portions of the worm shaft in the axial direction are supported to be rotatable in the casing through a bearing.

In addition, in this motor device, the rotation shaft fixed to the axial core part of the rotor core is supported in the casing through a bearing on the deceleration mechanism side in a cantilever state.

### Patent Documents

[Patent Document 1] Japanese Patent Laid-Open No. 2017-163731

### SUMMARY

In the motor device described in Patent Document 1, the rotation shaft is fitted and fixed to the rotor core such that it passes through the rotor core from one end side to the other end side in the axial direction. For this reason, when the number of steel sheets of the rotor core is increased to increase a motor output, the center of gravity of the rotor deviates to the rotor core side, and the influence of whirling of the rotor becomes high. In addition, an axial length of the rotation shaft increases, and thus the weight of the motor device increases to that extent.

Thus, the present disclosure provides a motor device capable of achieving improvement of an output and a decrease in the weight while whirling of the rotor is inhibited.

In order to solve the problems described above, a motor device according to the present disclosure employs the following configuration.

A motor device according to the present disclosure includes: a rotor having a rotor core that is formed from a plurality of steel sheets stacked in an axial direction of a rotation shaft and the rotation shaft having one end portion fixed to the rotor core and the other end portion protruding from the rotor core in the axial direction; a stator configured to form a rotating magnetic field that rotates the rotor; a casing configured to house the stator and the rotor; and a bearing mounted in the other end portion of the rotation shaft and configured to support the rotor in a state of being cantilevered in the casing with a rotor core side used as a free end, in which, in the axial direction, when a side towards the one end portion of the rotation shaft is a first direction, and an other side towards the other end portion of the rotation shaft is a second direction, an end face of the rotation shaft directed in the first direction is disposed further close to a second direction side than an end face of the rotor core directed in the first direction and further close to a first direction side than a center position of the rotor core in the axial direction.

In the motor device described above, the end face of the rotation shaft directed in the first direction is disposed on a further second direction side (a side supported in the casing through the bearing) than the end face of the rotor core directed in the first direction. For this reason, even in a case in which an output of a motor device is increased by increasing the number of stacked steel sheets of the rotor core, the output of the motor device can be increased without increasing the shaft length of the rotation shaft.

In addition, in the motor device described above, the end face of the rotation shaft directed in the first direction is disposed on a further first direction side than a center position of the rotor core in the axial direction. For this reason, the rotor is supported by the rotation shaft at the position of the center of gravity of the rotor core that is a heavy load.

Thus, while the motor device described above has a structure in which the end portion of the rotation shaft in the axial direction that protrudes from the rotor is cantilevered in the casing through the bearing, the motor device can achieve improvement of the output and a decrease in weight while inhibiting whirling of the rotor.

### BRIEF DESCRIPTION OF THE DRAWINGS

Fig. 1 is a perspective view of a motor device according to an embodiment.
Fig. 2 is a cross-sectional view of the motor device according to the embodiment taken along line II-II illustrated in Fig. 1.
Fig. 3 is a longitudinal cross-sectional view of a rotor according to the embodiment.
Fig. 4 is a perspective view of the rotor according to the embodiment.
Fig. 5 is an exploded perspective view of the rotor according to the embodiment.
Fig. 6 is a perspective view of a rotor according to the embodiment from which a magnet cover has been removed.
Fig. 7 is a plan view of the rotor according to the embodiment from which the magnet cover has been removed.
Figs. 8A and 8B are perspective views of a load reception block according to the embodiment.
Fig. 9 is an enlarged cross-sectional view of a part IX of the rotor according to the embodiment illustrated in Fig. 3.

### DESCRIPTION OF THE EMBODIMENTS

Hereinafter, an embodiment of the present disclosure will be described with reference to the drawings.

### (Motor device)

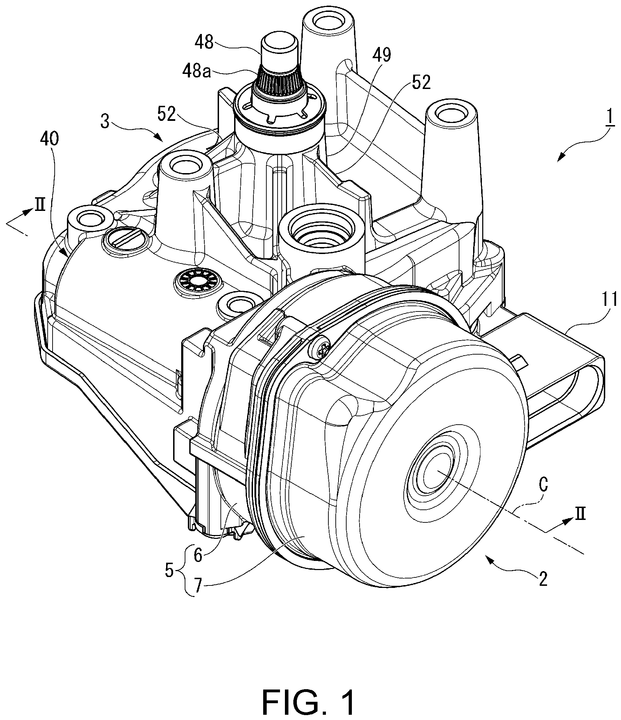

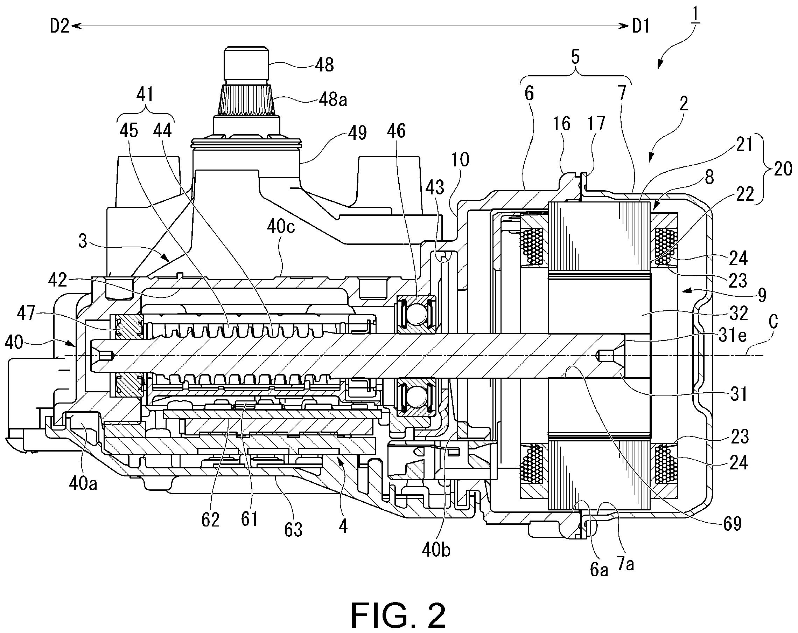

Fig. 1 is a perspective view of a motor device 1 used in a vehicle. Fig. 2 is a cross-sectional view of the motor device 1 taken along line II-II illustrated in Fig. 1.

The motor device 1, for example, is used as a drive source of a wiper device of the vehicle. As illustrated in Figs. 1 and 2, the motor device 1 includes a motor 2, a deceleration part 3 that decelerates rotation of the motor 2 and outputs the decelerated rotation, and a controller 4 that performs drive control of the motor 2.

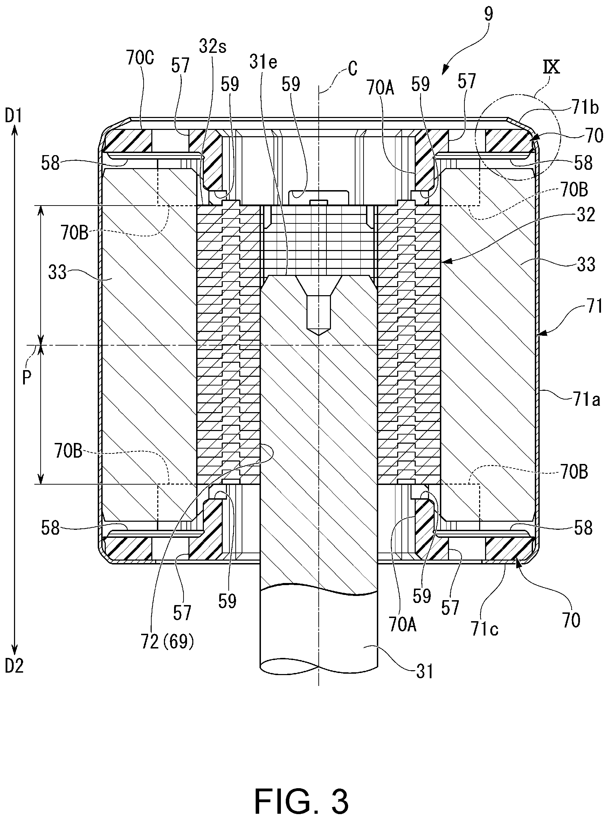

In the following description, in a case in which only "axial direction" is mentioned, it represents a direction along the direction of a rotation shaft line of the rotation shaft 31 of the motor 2, and, in a case in which only "circumferential direction" is mentioned, it represents a circumferential direction of the rotation shaft 31. In addition, in a case in which only a "diameter direction" is mentioned, it represents a diameter direction of the rotation shaft 31. In an "axial direction", one end part side of the rotation shaft 31 (a side on which an arrow points as D1 in Figs. 2 and 3) will be referred to a "first direction", and the other end part side of the rotation shaft 31 (a side on which the arrow points at D2 in Figs. 2 and 3) will be referred to as a "second direction".

### (Motor)

The motor 2 includes a motor case 5, a stator 8, which has an approximately cylinder shape, housed inside the motor case 5, and a rotor 9 that is disposed on the inner side of the stator 8 in the diameter direction and is disposed to be rotatable with respect to the stator 8. The motor 2 according to this embodiment is a so-called brushless motor that does not require a brush when power is supplied to the stator 8.

### (Motor case)

The motor case 5 is formed using a material having superior heat dissipation such as an aluminum alloy. The motor case 5 is composed of a first motor case 6 and a second motor case 7 configured to be dividable in the axial direction. Each of the first motor case 6 and the second motor case 7 is formed in a bottomed cylindrical shape.

The first motor case 6 is molded integrally with a gear case 40 such that a bottom portion 10 is connected to the gear case 40 of the deceleration part 3. A through hole through which the rotation shaft 31 of the motor 2 can be inserted is formed at approximately a center of the bottom portion 10 in the diameter direction. In this embodiment, the motor case 5 and the gear case 40 configure a casing of the motor device 1.

In opening portions 6a and 7a of the first motor case 6 and the second motor case 7, outer flange portions 16 and 17 protruding toward an outer side in the diameter direction are respectively formed. In the motor case 5, the outer flange portions 16 and 17 abut each other to form an internal space. A stator 8 and a rotor 9 are disposed in the internal space of the motor case 5. The stator 8 is pressed-fitted and fixed to a stepped portion formed on the inner circumferential face of the first motor case 6.

### (Stator)

The stator 8 includes a stator core 20 formed from stacked steel sheets (electromagnetic steel sheets) and multiple coils 24 wound around the stator core 20. The stator core 20 includes a core main body part 21 having an annular shape and multiple (for example, six) teeth 22 protruding from the inner circumferential portion of the core main body part 21 to the inner side in the diameter direction. The inner circumferential face of the core main body part 21 and the teeth 22 are covered with an insulator 23 made of a resin. Each coil 24 is wound around a predetermined tooth 22 from above the insulator 23. Each coil 24 generates a magnetic field for rotating the rotor 9 in accordance with power supplied from the controller 4.

### (Rotor)

The rotor 9 is disposed on the inner side of the stator 8 in the diameter direction to be rotatable through a minute gap. The rotor 9 includes a rotation shaft 31, a rotor core 32, which has an approximately cylindrical shape, to which the rotation shaft 31 is pressed-fitted and fixed to an inner circumferential portion, and four permanent magnets 33 (see Figs. 3, 5, 6, and the like) assembled into the outer circumferential portion of the rotor core 32. In this embodiment, the rotation shaft 31 is formed integrally with a worm shaft 44 configuring the deceleration part 3. However, the worm shaft 44 is not limited thereto and may be formed separately from the rotation shaft 31 and be connected to an end portion of the rotation shaft 31. The rotation shaft 31 and the worm shaft 44 are supported to be rotatable through bearings 46 and 47 in a gear case 40 (casing). The rotation shaft 31 and the worm shaft 44 rotate around a rotation shaft line (a shaft core C). As the permanent magnets 33, for example, ferrite magnets are used. However, the permanent magnets 33 are not limited thereto, and neodymium bonded magnets, neodymium sintered magnets, or the like can be used.

A detailed structure of the rotor 9 will be described later.

### (Deceleration part)

The deceleration part 3 includes the gear case 40 formed integrally with the motor case 5 and a deceleration mechanism 41 housed inside the gear case 40. The gear case 40 is formed using a metal material having superior heat radiation such as an aluminum alloy. The gear case 40 is formed in a box shape having an opening portion 40a in one face. The gear case 40 includes a gear housing part 42 that houses the deceleration mechanism 41 inside. In a side wall 40b of the gear case 40, an opening portion 43 allowing a through hole of the first motor case 6 to communicate with the gear housing part 42 is formed at a place at which the first motor case 6 is integrally formed.

In a bottom wall 40c of the gear case 40, a bearing boss 49 having an approximately cylindrical shape protrudes. The bearing boss 49 is used to support an output shaft 48 of the deceleration mechanism 41 to be rotatable, and a sliding bearing not illustrated in the drawing is disposed on the inner circumferential side. An O ring, which is not illustrated, is mounted on the inner side of a tip end portion of the bearing boss 49. In addition, multiple ribs 52 for securing rigidity are formed to protrude on an outer circumferential face of the bearing boss 49.

The deceleration mechanism 41 housed in the gear housing part 42 is composed of the worm shaft 44 and a worm wheel 45 engaged with the worm shaft 44. Both ends of the worm shaft 44 in the axial direction are supported in the gear case 40 to be rotatable through the bearings 46 and 47. In addition, the worm shaft 44 is integrally disposed at the same axis as the rotation shaft 31 of the motor 2. In the worm wheel 45, the output shaft 48 of the deceleration mechanism 41 is integrally disposed at the same axis of the output shaft 48 of the deceleration mechanism 41. The worm wheel 45 and the output shaft 48 are disposed such that such a rotation shaft line is approximately orthogonal to the rotation shaft line (the shaft core C) of the worm shaft 44 (the rotation shaft 31 of the motor 2). The output shaft 48 protrudes to the outside through the bearing boss 49 of the gear case 40. A spline 48a that can be connected to a target product driving a motor is formed at a protruding tip end of the output shaft 48.

A sensor magnet that is not illustrated is disposed in the worm wheel 45. The position of this sensor magnet is detected by a magnetism detecting element 61 disposed in the controller 4 to be described later. In other words, the rotation position of the worm wheel 45 is detected by the magnetism detecting element 61 of the controller 4.

### (Controller)

The controller 4 includes a controller board 62 in which the magnetism detecting element 61 is mounted. The controller board 62 is disposed inside the opening portion 40a of the gear case 40 such that the magnetism detecting element 61 faces the sensor magnet of the worm wheel 45. The opening portion 40a of the gear case 40 is closed by a cover 63.

Terminal portions of multiple coils 24 drawn from the stator core 20 are connected to the controller board 62. In addition, terminals of a connector 11 (see Fig. 1) disposed in the cover 63 are electrically connected to the controller board 62. A power module (not illustrated) formed from switching elements such as field effect transistors (FET) controlling drive voltages supplied to the coils 24, a capacitor (not illustrated) that performs smoothing of a voltage, and the like other than the magnetism detecting elements 61 are mounted in the controller board 62.

### (Detailed structure of rotor)

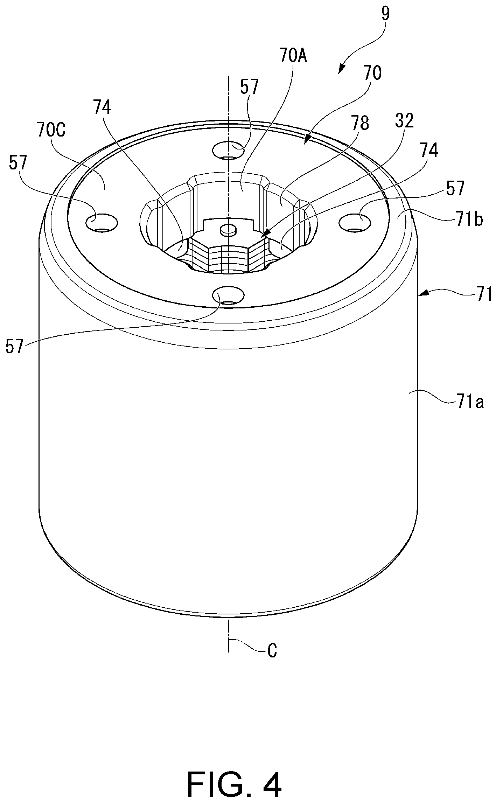

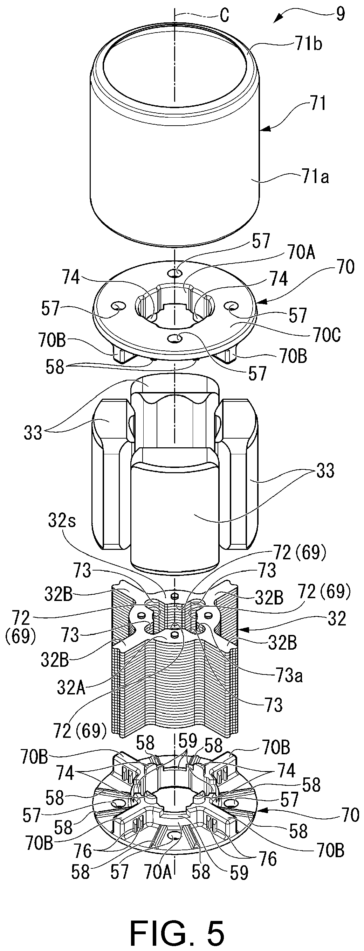

Fig. 3 is a longitudinal cross-sectional view of the rotor 9, and Fig. 4 is a perspective view of the rotor 9. Fig. 5 is an exploded perspective view of the rotor 9.

As illustrated in such drawings, the rotor 9 includes the rotor core 32 that can rotate around the rotation shaft line (the shaft core C) together with the rotation shaft 31, the rotation shaft 31 that has one end portion fixed to the rotor core 32 and the other end portion protruding from the rotor core 32 in the axial direction, the four permanent magnets 33 disposed in the outer circumferential portion of the rotor core 32, one pair of load reception blocks 70 that are respectively disposed on one end side and the other end side of the rotor core 32 in the axial direction, and a magnet cover 71 made of metal that covers the rotor core 32, the permanent magnets 33, and the one pair of load reception blocks 70 from the outer side in the axial direction and the diameter direction.

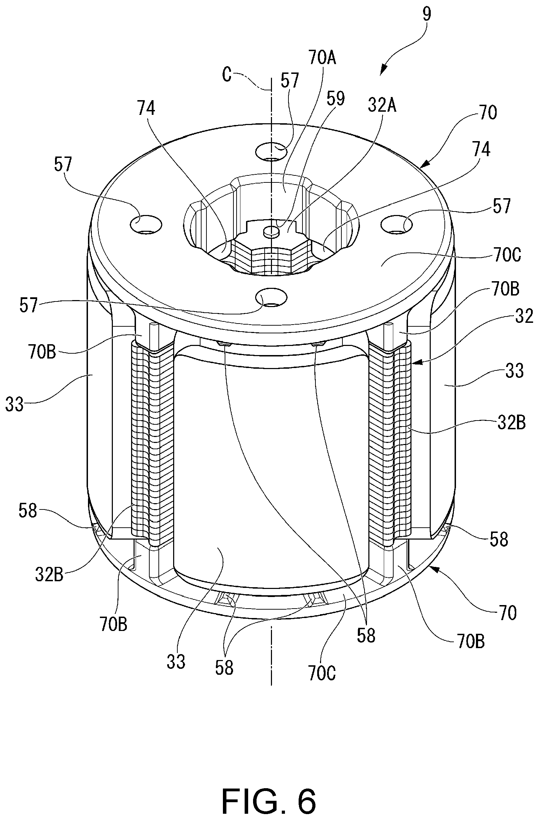

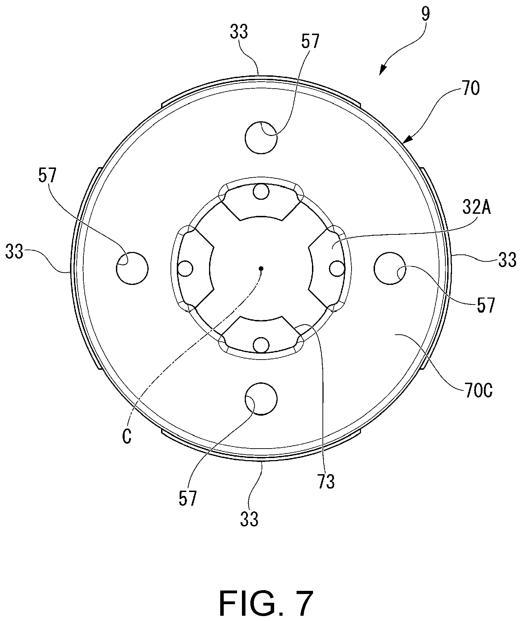

Fig. 6 is a perspective view of the rotor 9 from which the magnet cover 71 has been removed, and Fig. 7 is a plan view of the rotor 9 from which the magnet cover 71 has been removed.

The rotor core 32 is configured by stacking multiple steel sheets (electromagnetic steel sheets) having an approximately same shape in the axial direction. The rotor core 32 has a core main body part 32A having an approximately cylindrical shape and four salient poles 32B protruding from the outer circumference of the core main body part 32A in the radial direction.

The four salient poles 32B protrude from the outer circumference of the core main body part 32A in the circumferential direction at equal intervals. In this embodiment, an outer circumferential face of the core main body part 32A is formed in an approximate circular shape having the shaft core C (the rotation shaft line) of the rotor 9 as its center. A side face facing in the circumferential direction of the rotor core 32 among the salient poles 32B is composed of a flat face. The permanent magnet 33 is assembled between the salient poles 32B adjacent to each other in the circumferential direction of the rotor core 32.

In this embodiment, the permanent magnet 33 is formed in an approximately arc shape in the view of the axial direction. While the inner circumference side of the permanent magnet 33 is formed in an approximately arc shape having the shaft core C (the rotation shaft line) of the rotor 9 as its center (an approximately arc shape almost coinciding the outer circumferential face of the core main body part 32A), the outer circumference side of the permanent magnet 33 is formed in an arc shape of which a radius of curvature is smaller than that of the inner circumference side. Each salient pole 32B of the rotor core 32 is formed such that a distance from the shaft core C (the rotation shaft line) of the rotor 9 to an end portion on the outer side in the diameter direction is almost the same as a distance from the shaft core C (the rotation shaft line) of the rotor 9 to a maximum swelling portion of the outer circumferential face of the permanent magnet 33.

Each permanent magnet 33 is formed such that a length in the axial direction, as illustrated in Fig. 3, is longer than the length of the rotor core 32 in the axial direction. In this embodiment, each permanent magnet 33 is set such that it protrudes by an almost the same length on one end side and the other end side in the axial direction with respect to the salient pole 32B in the state of being assembled into the rotor core 32.

In addition, on the inner circumferential face of the rotor core 32, as illustrated in Fig. 5, four arc faces 72 having the shaft core C (the rotation shaft line) of the rotor 9 as their center and clearance grooves 73 extending from between the arc faces 72 adjacent to each other to the outer side in the diameter direction are formed. The clearance grooves 73 extend to the outer side in the diameter direction with the same length, and end portions thereof in the extending direction are configured as arc-shaped engagement parts 73a. Locking claws 74 (core regulating parts) of the load reception block 70 to be described later are fitted into the engagement parts 73a of the clearance grooves 73. In addition, the rotation shaft 31 of the motor 2 is press-fitted and fixed to four arc faces 72 of the inner circumference of the rotor core 32.

The four arc faces 72 of the inner circumference of the rotor core 32 configure a shaft core hole 69 to which the rotation shaft 31 is fitted (fixed in the state of being inserted).

The magnet cover 71 has a peripheral wall part 71a having a cylindrical shape and one pair of flange parts 71b and 71c extending respectively from one end portion and the other end portion of the peripheral wall part 71a to be bent in the axial direction to the inner side in the diameter direction. The rotor core 32 and the permanent magnet 33 are disposed on the inner side of the peripheral wall part 71a together with one pair of the load reception blocks 70. At least one of the one pair of the flange parts 71b and 71c is configured as a caulked flange acquired by performing plastic deformation of end portions of the peripheral wall part 71a through caulking. Hereinafter, it is assumed that one flange part 71c is formed to be bent in advance, and the other flange part 71b is formed through caulking after loading the rotor core 32 and the like in description.

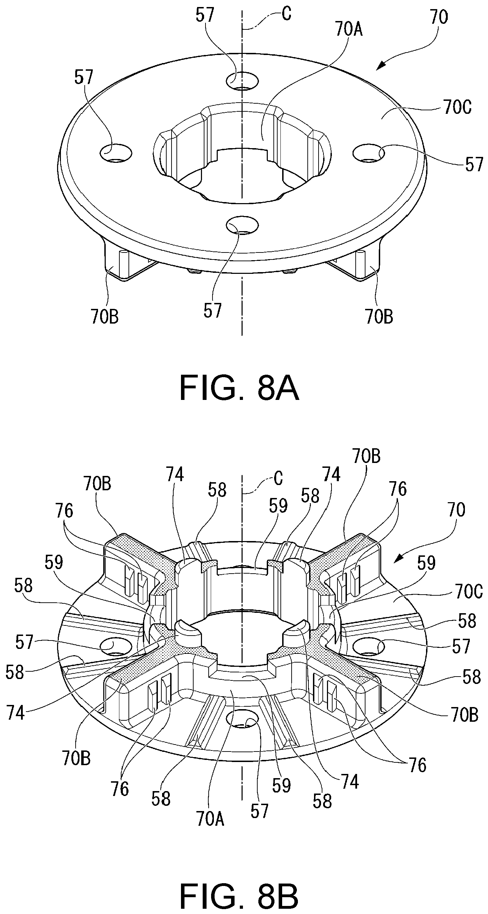

Figs. 8A and 8B are perspective views of the load reception block 70. Fig. 8A is a diagram of the load reception block 70 seen in a first direction, and Fig. 8B is a diagram of the load reception block 70 seen in a second direction. The load reception blocks 70 respectively disposed on the first-direction side and the second-direction side of the rotor core 32 have the same shape and are assembled into the rotor core 32 in states in which front/rear sides are reversed.

The load reception block 70 has an annular part 70A disposed to be superimposed on an end face of the core main body part 32A of the rotor core 32 in the axial direction, four corner parts 70B that protrude from the outer circumferential face of the annular part 70A in the radial direction and are disposed to be superimposed on end faces of the salient poles 32B of the rotor core 32 in the axial direction, and an end part wall 70C having a perforated disc shape that is integrally connected to the outer side of the annular part 70A and the corner parts 70B in the axial direction and is projected from the annular part 70A to the outer side in the diameter direction. The four corner parts 70B project from the outer circumference of the annular part 70A at equal intervals. For example, the load reception block 70 is formed using a hard resin. The load reception block 70 is formed in a shape that almost overlaps with the rotor core 32 when viewed in the axial direction. The annular part 70A is disposed to be superimposed on the end face of the core main body part 32A of the rotor core 32 in the axial direction.

Each load reception block 70 is disposed to be superimposed on the end face of the rotor core 32 in the axial direction, and an outer area in the diameter direction is disposed between the end face of the rotor core 32 and the flange parts 71b and 71c of the magnet cover 71. In this embodiment, the flange part 71b disposed on the upper side in Fig. 3 is configured as the caulking flange, and, when a caulking operation is performed on the flange part 71b, the caulking load is received by the corner parts 70B of the load reception block 70 disposed on the upper side through the flange part 71b.

The four corner parts 70B of the load reception block 70 are disposed to be superimposed on the end face of each salient pole 32B of the rotor core 32 in the axial direction. The end part wall 70C is formed in a disc shape (a perforated disc shape) having a radius of almost the same size as a length from the shaft core C of the rotor core 32 to the tip end portion of the corner part 70B. The end part wall 70C closes spaces between the corner parts 70B adjacent in the circumferential direction at a position disposed on the outer side of the corner parts 70B in the axial direction.

At an extending position of each corner part 70B in an inner circumferential edge portion of the annular part 70A of the load reception block 70, a locking claw 74 protruding to the rotor core 32 side approximately along the axial direction is integrally formed. The locking claw 74 has a cross-section formed in an approximately semi-circle shape and is configured to be fitted to a clearance groove 73 (an engagement part 73a) of the inner circumference of the rotor core 32 when the load reception block 70 is assembled into the end face of the rotor core 32. In accordance with each locking claw 74 being fitted to the clearance groove 73 (the engagement part 73a) corresponding to each locking claw 74, a relative displacement of the load reception block 70 in the diameter direction with respect to the rotor core 32 is regulated.

In addition, one pair of pressure fitting projections 76 are formed on a side face near a base part of each corner part 70B of the load reception block 70 are formed. Each pressure fitting projection 76 is formed such that it extends along the axial direction and an expanding height is gradually lowered toward a side approaching the rotor core 32.

The load reception block 70 is assembled into the rotor core 32 in which the permanent magnet 33 is disposed on the outer circumferential portion, and an end portion of each permanent magnet 33 is inserted and disposed between the corner parts 70B of the load reception block 70 that are adjacent to each other. At this time, a contact face of the permanent magnet 33 is brought into contact with the pressure fitting projection 76. In accordance with this, the displacement of the permanent magnet 33 in the circumferential direction is regulated.

Each checking hole 57 having a circular shape is formed at a position on the end part wall 70C between the corner parts 70B that are adjacent to each other. The checking holes 57 are formed at positions facing the end faces of the permanent magnets 33 in the axial direction such that the positions of the permanent magnets 33 can be visually checked from the outside of the rotor 9 when the load reception block 70 is assembled into the inside of the magnet cover 71 together with the rotor core 32 holding the permanent magnets 33. In the case of this embodiment, four checking holes 57 are disposed such that one pair thereof corresponds to each permanent magnet 33.

In the case of the rotor 9 according to this embodiment, the end portion of the load reception block 70 on the outer side in the axial direction is covered with the end part wall 70C having an approximately disc shape. For this reason, when the load reception block 70 is inserted into the magnet cover 71 together with the rotor core 32 holding the permanent magnet 33, and the end portion of the magnet cover 71 (the flange parts 71b and 71c) are caulked in the state, the end portion of the magnet cover 71 is caulked and fixed to the end part wall 70C to cover the entire area of the outer circumference of the end part wall 70C.

The end part wall 70C of the load reception block 70 has a face on the outer side in the axial direction formed to be flat such that, when the end portion of the magnet cover 71 is caulked, the caulking load uniformly acts on the entire area of the outer circumference of the end part wall 70C (see Fig. 8(A)). On the other hand, on a face of the end part wall 70C that is disposed on the inner side in the axial direction, as illustrated in Fig. 8B, multiple reinforcing ribs 58 extending in the radial direction are disposed to protrude.

In addition, concave parts 59 having a low protrusion height from the end part wall 70C are formed at multiple places in the annular part 70A of the load reception block 70. Each concave part 59 is disposed between base end portions of the corner parts 70B that are adjacent to each other in the circumferential direction in the annular part 70A.

In addition, in the load reception block 70, when it is assembled into the inside of the magnet cover 71, portions illustrated with dots being inserted therein in Fig. 8B (an area of the end face of the annular part 70A disposed on the inner side in the axial direction with the concave part 59 excluded and the end face of each corner part 70B on the inner side in the axial direction) are brought into contact with the core main body part 32A of the rotor core 32 and the end face of the salient pole 32B in the axial direction.

In this embodiment, an area protruding to the inner side of the load reception block 70 in the axial direction is divided into four blocks in the circumferential direction with each concave part 59 interposed therebetween. For this reason, adjustment of a forming die for accurately bringing the end face of each block into contact with the end face of the rotor core 32 in the axial direction can be easily performed.

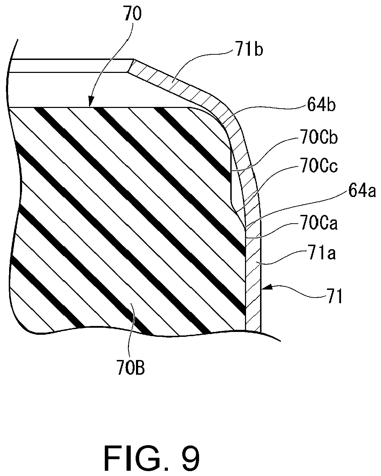

Fig. 9 is an enlarged cross-sectional view of a part IX of the rotor 9 illustrated in Fig. 3.

As illustrated in the drawing, in an end portion of the end part wall 70C of the load reception block 70 that is disposed on the outer side in the axial direction, a small diameter part 70Cb of which an outer diameter is slightly smaller than that of the other part (hereinafter, referred to as a "general part 70Ca") is formed. The general part 70Ca and the small diameter part 70Cb are connected using an inclined face 70Cc inclined in a tapered shape from the general part 70Ca to the small diameter part 70Cb. A corner part 64a forming an obtuse angle is configured between the general part 70Ca and the inclined face 70Cc. In addition, an end part of the small diameter part 70Cb that is disposed on the outer side in the axial direction (an end part of the end part wall 70C that is disposed on the outer side in the axial direction) is configured using a curved part 64b having an arc shape.

The corner part 64a and the curved part 64b described above that are disposed on the outer circumference of the end part wall 70C become two caulking base points when the end part (the flange part 71b) of the magnet cover 71 in the axial direction is caulked for the load reception block 70. In other words, when a caulking load is applied to the end part of the magnet cover 71 in the axial direction, the corner part 64a becomes a first caulking base point (a first caulking base point), and, when a caulking load is applied to the end part of the magnet cover 71 in the axial direction, the curved part 64b becomes a next caulking base point (a second caulking base point).

Thus, in a case in which this configuration is employed, when the end part of the magnet cover 71 in the axial direction is caulked, a stress acting from the magnet cover 71 to the load reception block 70 is alleviated, and deterioration and damage of the load reception block 70 can be prevented.

### (Assembly of rotor)

When the rotor 9 is assembled, first, the permanent magnets 33 are disposed in the outer circumferential portion of the rotor core 32, the load reception blocks 70 are temporarily assembled into the end faces of the rotor core 32 in the axial direction in the state, and the assembly is inserted into the inside of the magnet cover 71 in the state. At this time, one flange part 71c of the magnet cover 71 is formed to be bent in advance.

Next, caulking is performed on the end edge on the other side (second direction side) of the magnet cover 71 in the axial direction from this state, the flange part 71b (the caulking flange) is formed through plastic deformation, and the flange part 71b is brought into pressure contact with the end faces of the corner parts 70B of the load reception blocks 70. As a result, the rotor core 32 and the permanent magnets 33 are fixed inside the magnet cover 71 together with the load reception blocks 70.

### (Rotor and rotation shaft)

In the rotor 9 configured described above, an end portion (one end portion) that is opposite to the worm shaft 44 side of the rotation shaft 31 is fitted to the shaft core hole 69 of the rotor core 32, and the rotor 9 is fixed integrally with the rotation shaft 31 in accordance therewith. The rotation shaft 31 is fixed to the rotor core 32 in a state in which an end portion (the other end portion) on the worm shaft 44 side protrudes from the rotor core 32 in the second direction. The rotation shaft 31 is fixed to the gear case 40 using the bearings 46 and 47 mounted in the other end portion. In accordance with this, the rotor 9 is cantilevered in the gear case 40 with the other end portion side (the second direction side) of the rotation shaft 31 as a fixed end and the rotor core 32 side (the first direction side) as a free end. The rotation shaft 31 does not completely pass through the rotor core 32 in the axial direction and is fixed in a state in which the end face 31e directed in the first direction (hereinafter, referred to as a "rotation shaft end face 31e") stops at a predetermined position inside the shaft core hole 69.

More specifically, the rotation shaft 31, as illustrated in Fig. 3, has the rotation shaft end face 31e disposed on a further second direction side than the end face of the rotor core 32 directed in the first direction (hereinafter, referred to as a "rotor core end face 32s") and is disposed on a further on a first direction side than a center position P (a center position in the stacking direction) of the rotor core 32 in the axial direction.

### (Effect of embodiment)

In the motor device 1 according to this embodiment, the rotation shaft end face 31e of the rotation shaft 31 directed in the first direction is disposed on a further second direction side than the rotor core end face 32s of the rotor core 32 directed in the first direction. For this reason, even in a case in which the motor output is increased by increasing the number of stacked steel sheets of the rotor core 32, the motor output can be increased without increasing the shaft length of the rotation shaft 31, and a decrease in the weight can be achieved to that extent.

In addition, in the motor device 1 according to this embodiment, the rotation shaft end face 31e is disposed on a further first direction side (a position on a side opposite to the deceleration part 3) than the center position P of the rotor core 32 in the axial direction (a stacking direction). For this reason, in the rotor 9, the position of the center of gravity of the rotor core 32 that is a heavy load is necessarily fixed to the rotation shaft 31.

Thus, while the motor device 1 according to this embodiment has a structure in which the other end portion of the rotation shaft 31 in the axial direction, which protrudes from the rotor core 32, is cantilevered in the casing (the gear case 40) through the bearings 46 and 47, improvement of the output and a decrease in the weight can be achieved while the whirling of the rotor 9 is inhibited.

In addition, when a positional relation between the rotation shaft end face 31e of the rotation shaft 31 and the rotor core 32 satisfies the relation described above, the common rotation shaft 31 can be used in multiple types of motor devices of which the numbers of stacked steel sheets of the rotor cores 32 are different from each other (the motor outputs are different). In this case, the production efficiency at a production site can be increased.

In addition, in the motor device 1 according to this embodiment, the deceleration mechanism 41 including the worm shaft 44 disposed in the rotation shaft 31 and the worm wheel 45 engaged with the worm shaft 44 is housed inside the casing (the gear case 40), and both end portions in the axial direction of the worm shaft 44 are supported in the casing (the gear case 40) through the bearings 46 and 47. In the case of the structure in which the worm shaft 44 is disposed in the rotation shaft 31 of the motor 2, a reaction force moving the worm shaft 44 to be inclined is generated from the worm wheel 45 to the worm shaft 44 when the power is output. However, in the motor device 1 according to this embodiment, the rotor 9 is supported by the rotation shaft 31 at the position of the center of gravity of the rotor core 32 that is a heavy load, and thus, the whirling of the rotor 9 at the rotation shaft 31 of the motor 2 can be further decreased.

Furthermore, in the motor device 1 according to this embodiment, the rotor core 32 has the core main body part 32A having the shaft core hole 69 that is fixed in a state in which the rotation shaft 31 is inserted therein and the multiple salient poles 32B protruding from the outer circumference of the core main body part 32A in the radial direction, and the rotor 9 includes the permanent magnets 33 disposed between the salient poles 32B adjacent to each other and the magnet cover 71 covering the outer side of the rotor core 32 and the permanent magnets 33. The magnet cover 71 has the peripheral wall part 71a covering the outer side of the rotor core 32 and the permanent magnets 33 in the diameter direction and the flange parts 71b and 71c that are bent from the end portion of the peripheral wall part 71a in the axial direction to the inner side in the diameter direction. For this reason, in the motor device 1 according to this embodiment, multiple steel sheets of the rotor core 32 that are stacked in the axial direction are covered with the magnet cover 71 together with the permanent magnets 33. Thus, in a case in which the motor device 1 according to this embodiment is employed, even when there are some of the multiple steel sheets of the rotor core 32 that are not directly fixed to the rotation shaft 31, positional deviations of the steel sheets can be inhibited by the magnet cover 71.

In addition, the motor device 1 according to this embodiment has a structure in which the load reception blocks 70 are disposed between the end face of the rotor core 32 in the axial direction and the flange parts 71b and 71c of the magnet cover 71, and the end face of the rotor core 32 in the axial direction and the flange parts 71b and 71c are brought into contact with the load reception blocks 70. For this reason, when the rotor 9 is manufactured, the rotor core 32 and the permanent magnets 33 are set on the inner side of the peripheral wall part 71a of the magnet cover 71, and, when the flange parts 71b and 71c are caulked, the caulking load can be received by the load reception blocks 70. As a result, a caulking load does not directly act on the permanent magnets 33 disposed inside the magnet cover 71, and damage and deterioration of the permanent magnets 33 at the time of manufacturing the rotor 9 can be prevented in advance.

### [Reference Signs List]

1 motor device
5 motor case (casing)
8 stator
9 rotor
31 rotation shaft
32 rotor core
32A core main body part
32B salient pole
33 permanent magnet
40 gear case (casing)
41 deceleration mechanism
44 worm shaft
45 worm wheel
46, 47 bearings
69 shaft core hole
70 load reception block
71 magnet cover
71a peripheral wall part
71b, 71c flange parts

## Claims

1. A motor device (1) comprising:
a rotor (9) comprising a rotor core (32) that is formed from a plurality of steel sheets stacked in an axial direction of a rotation shaft (31) and the rotation shaft (31) having one end portion fixed to the rotor core (32) and the other end portion protruding from the rotor core (32) in the axial direction;
a stator (8) configured to form a rotating magnetic field that rotates the rotor (9);
a casing (5) configured to house the stator (8) and the rotor (9); and
a bearing (46, 47) mounted in the other end portion of the rotation shaft (31) and configured to support the rotor (9) in a state of being cantilevered in the casing (5) with a rotor core side used as a free end,
wherein, in the axial direction, when a side towards the one end portion of the rotation shaft (31) is a first direction, and an other side towards the other end portion of the rotation shaft (31) is a second direction, an end face (31e) of the rotation shaft (31) directed in the first direction is disposed further close to a second direction side than an end face (32s) of the rotor core (32) directed in the first direction and further close to a first direction side than a center position (P) of the rotor core (32) in the axial direction.

2. The motor device (1) according to claim 1,
wherein a deceleration mechanism (41) that decelerates rotation of the rotation shaft (31) and outputs the decelerated rotation to an outside is housed inside the casing (5),
wherein the deceleration mechanism (41) comprises:
a worm shaft (44) disposed in the rotation shaft (31); and
a worm wheel (45) engaged with the worm shaft (44), and
wherein both side portions of the worm shaft (44) in the axial direction are supported in the casing (5) through the bearing (46, 47).

3. The motor device (1) according to claim 1 or 2,
wherein the rotor core (32) comprises a core main body part (32A) of an approximately cylindrical shape having a shaft core hole (69) that fixes the rotation shaft (31) inserted therein and a plurality of salient poles (32B) protruding from an outer circumference of the core main body part (32A) in a radial direction,
wherein the rotor (9) further comprises permanent magnets (33) disposed between the plurality of salient poles (32B) that are adjacent to each other and a magnet cover (71) covering an outer side of the rotor core (32) and the permanent magnets (33), and
wherein the magnet cover (71) comprises a peripheral wall part (71a) covering the outer side of the rotor core (32) and the permanent magnets (33) in a diameter direction and a flange part (71b, 71c) bent from an end portion of the peripheral wall part (71a) in the axial direction to an inner side in the diameter direction.

4. The motor device (1) according to claim 3, wherein the rotor (9) further comprises a load reception block (70) that is disposed between an end face of the rotor core (32) in the axial direction and the flange part (71b, 71c) and is brought into contact with the end face of the rotor core (32) in the axial direction and the flange part (71b, 71c).
